**Europäisches Patentamt**

**European Patent Office**

**Office européen des brevets**

(19)

(11) Publication number: **0 187 913**
**B1**

## (12) EUROPEAN PATENT SPECIFICATION

(45) Date of publication of patent specification: **23.08.89**

(51) Int. Cl.⁴: **B 05 B 7/08**

(21) Application number: **85114528.4**

(22) Date of filing: **15.11.85**

(54) Ultrafine particle spraying apparatus.

(30) Priority: **14.01.85 JP 3162/85**

(43) Date of publication of application:
**23.07.86 Bulletin 86/30**

(45) Publication of the grant of the patent:
**23.08.89 Bulletin 89/34**

(84) Designated Contracting States:
**DE FR GB**

(56) References cited:
**EP-A-0 043 077**
**FR-A-2 548 556**
**US-A-4 197 333**
**US-A-4 207 356**

(73) Proprietor: **Research Development Corporation of Japan**
**5-2, Nagatacho 2-chome**
**Chiyoda-ku Tokyo (JP)**

(73) Proprietor: **Vacuum Metallurgical Co. Ltd.**
**No. 516, Yokota, Sanbu-cho**
**Sanbu-gun Chiba-ken (JP)**

(72) Inventor: **Hayashi, Chikara**
**No. 7-22, Misumi-cho**
**Chigasaki-shi Kanagawa-ken (JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

Courier Press, Leamington Spa, England.

## Description

The present invention relates to a spraying apparatus suitable for surface-spraying of ultra-fine particles with a diameter between 10—100 Å, said apparatus comprising a particle container, a carrier gas source and a conveying pipe provided at its end with nozzle means.

In an apparatus of this kind, which is described in the Japanese Patent Application 57—196085 (this document forms no part of the prior art according to article 54 EPC) the ultra-fine particles are sent under pressure by a carrier gas through a conveying pipe, and are sprayed onto a predetermined object surface through a single nozzle pipe provided on a forward end of the conveying pipe so that there may be formed a predetermined adhesion deposit of the ultra-fine particles in the form of a point, a line, an area or the like.

This apparatus, however, is such that in a case where ultra-fine prticles are sprayed onto the object surface through a single nozzle pipe for drawing a line, for instance, the particles are caused to strike against the object surface and adhered thereto by inertia of their own, while the carrier gas tends to spread outwards and to run away, and accordingly if the nozzle pipe is made larger in caliber, since the carrier gas flows toward the circumference thereof, the ultra-fine particles are liable to be scattered around in accordance with a fringe flow of the carrier gas, and accordingly an outline of the drawn line tends to be become blurred. Therefore, in general, the nozzle pipe to be used is preferably smaller than 1 mm in caliber and is usually 0,2—0,6 mm in caliber.

A line can be drawn distinctly in outline thereof by the nozzle pipe of such a proper caliber, but for drawing a thick line, or a striped pattern consisting in or comprising of such thick lines larger than 1 mm in width on a surface, etc. it is necessary to repeatedly draw such a thick line, after a single line is drawn by the nozzle. For this the nozzle has to be shifted laterally and to be moved linearly along the foregoing drawn line with or without leaving space therebetween. It takes much time and is troublesome in working and low in efficiency to form a coating film extending over almost the whole surface, and it is difficult in this case to obtain a uniform thickness. Thus, the conventional apparatus has various inconveniences as described above.

FR—A—2 548 556 discloses a device for subdividing a unique primary stream of a pulverous product suspending in a gas into a plurality of secondary steams to uniformly supply the pulverous product to a slit nozzle of considerable width. In this device a plurality of channels is formed around a cone arranged within a suitable formed housing. While the peak of the cone is directed against said coming stream, said plurality of channels ends at the base portion of said cone in individual terminals where going tubes or pipes are connected to convey the product to said slit nozzle. Although this known device makes the distribution within the unique slit nozzle more uniform by branching the primary product stream into a plurality of secondary streams which are supplied to the slit nozzle in a linear arrangement it is, however, not adapted to overcome the above inconvenience because the main problem, namely the scattering of the ultra-fine particles caused by the tendency of the carrier gas to be spread outwards and to run away when using a single nozzle pipe with larger throughflow section, is not solved.

It is therefore an object of the invention to provide an apparatus for spraying ultra-fine particles onto a surface in which the said scattering of the particles is avoided and accordingly the blurring of the outline of the pattern to be drawn is effectively suppressed.

This object is achieved according to the invention by a spraying apparatus as is cited above and which is characterized in that the nozzle means is formed by at least one bundle of at least two parallel pipes, the pipes of each bundle being disposed substantially without space between each other, and the outflow openings of all pipes being substantially co-planar.

Embodiments of this invention will now be explained with reference to the accompanying drawings:

Fig. 1A is a side view of one example of this invention apparatus,

Fig. 1B is a front view thereof,

Fig. 1C is a top plan view of a part of a formed film thereof,

Fig. 2A is a side view of a modified example thereof,

Fig. 2B is a front view thereof,

Fig. 2C is a top plan view of a part of a formed film thereof,

Fig. 3A is a front view of another modified example thereof,

Fig. 3B is a top plan view of a part of a formed film thereof, and

Figs. 4, 5, 6 are explanation diagrams showing respective film forming apparatus each having this invention apparatus.

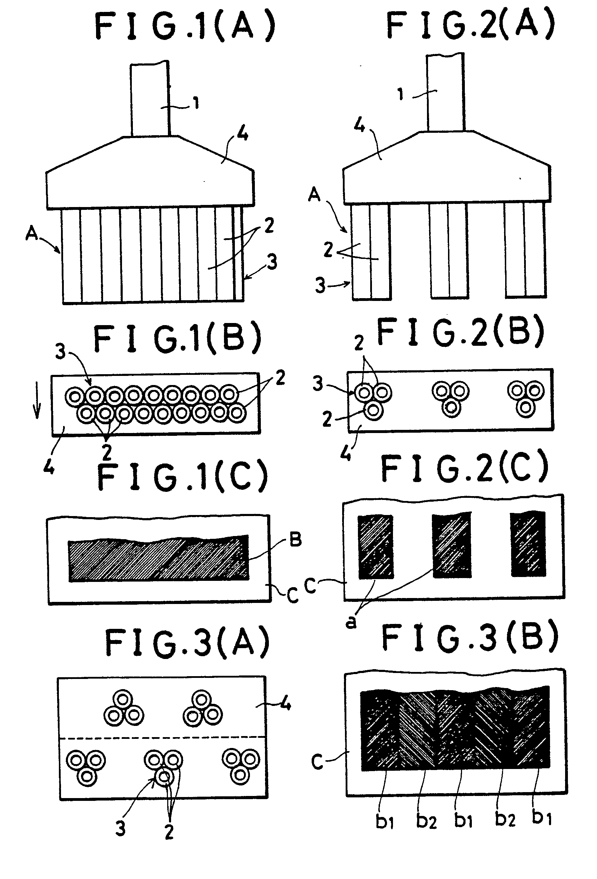

Figs. 1A and 1B show one embodiment of this invention. Referring to these Figures, numeral 1 denotes a conveying pipe which is connected to a container for a mixture gas comprising ultrafine particles and a carrier gas for stirring the same, and a pressure pump for supplying thereof under pressure, and the conveying pipe 1 is provided on its forward end with a bundle-shaped nozzle means 3 comprising plural nozzle pipes 2, 2 ... bundled together. Numeral 4 denotes a flat-shaped distribution base portion for attaching the bundle-shaped nozzle means 3 to the forward end of the conveying pipe 1.

More in detail, each nozzle pipe 2 is a stainless steel made tubular member of 1 mm in outer diameter and 0.5 mm in caliber (inner diameter), for instance. The bundled arrangement condition thereof is such that front and rear rows, each comprising nine nozzle pipes 9 lined up laterally without any space, between the respected adjacent ones, are staggered in position laterally one with another, and thus there is formed the bundle-shaped nozzle means 3 of 9.5 mm in width from end to end.

If this invention apparatus A thus formed is so operated that ultrafine particles are sprayed through the conveying pipe 1 onto the surface of the objective member C, while the objective member C such as a glass plate or the like located therebelow is being moved in the direction of an arrow, there can be drawn, at a stroke, such a band-shaped film B of the ultrafine particles that is 9 mm in width and that is clear in its outline as shown in Fig. 1C.

Figs. 2A and 2B show another embodiment of this invention. The bundle-shaped nozzle means 3 comprises three nozzle pipes 2 bundled together in a triangular form, and three groups thereof are disposed laterally at regular intervals on the base portion 4. By this arrangement, a striped pattern comprising three thick line films *a* of the ultrafine particles as shown in Fig. 2C can be formed at a stroke.

Fig. 3A shows a modified example of the embodiment shown in Figs. 2A and 2B. The bundle-shaped nozzle means 3 comprises three nozzle pipes 2 bundled together in a triangular form. Three groups thereof are disposed laterally at regular intervals to form a front row, and additional two groups thereof are disposed correspondingly to the respective intervals between the adjacent ones of the three groups comprising the front row to form a rear row. If, when this nozzle apparatus is to be used, the interior of the conveying pipe 1 is divided into front and rear setions thereof, and metallic ultrafine particles and ceramic ultrafine particles are sprayed simultaneously onto the front objective surface through the rear section and the front section, respectively, there can be formed respective striped patterns comprising metallic three thick line films $b_1$ and ceramic two thick films $b_2$ which are disposed alternately one with another, as shown in Fig. 3B.

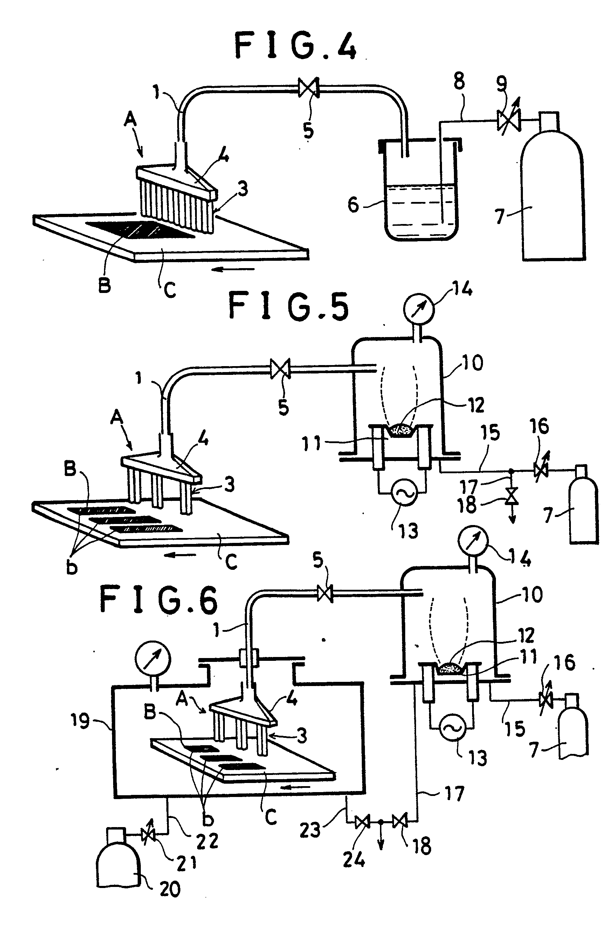

Next, a film forming apparatus provided with this invention ultrafine particle spraying apparatus will be explained with reference to Fig. 4.

This shows an example of use of this invented ultrafine particle spraying apparatus having the bundle-shaped nozzle means 3 shown in Fig. 1. The conveying pipe 1 of 5 mm in inner diameter extending rearwards from the base portion 4 of the apparatus A is connected, through a control valve 5, to a container 6 for containing a mixture comprising ultrafine particles and a carrier gas. The container 6 is, in turn, connected through a conduit pipe 8 to a hydrogen bomb 7. Numeral 9 denotes a control valve interposed in the conduit pipe 8. The container 6 is previously charged with a proper amount of Ni ultrafine particles.

The operation of the film forming apparatus thus constructed is as follows:

Hydrogen gas is flown into the container 6 from the hydrogen bomb 7 under a predetermined pressure and at a flow rate of 0,2 l/sec., and thereby the Ni ultrafine particle mess is floated so that there is formed a mixture gas thereof, and the mixture gas is carried through the conveying pipe 1 by a flow rate of the carrier gas of 10 m/sec and is introduced into the distribution base portion 4 for being distributed thereby and jet through the forward end bundle-shaped nozzle means 3. On this occasion, the flowing rate thereof is increased to 50 m/sec. in each nozzle pipe 2. If, consequently, the ultrafine particles vigorously jetted from the nozzle pipes 2 are adhered to an objective substrate C such as a glass plate or the like which is provided below the bundle-shaped nozzle means 3 and is being moved in one direction, there is formed a broad Ni ultrafine particle deposit film B of the same in width as the bundle-shaped nozzle means 3. In this case, the gap between the forward end of the nozzle means 3 and the surface of the substrate C is set to be 1.5 mm. If the substrate C is moved at a speed f 0.5 mm/sec. from the beginning of the spraying, there is formed the Ni film of 9 mm in width and 4 mm in thickness. This film can be obtained simply by the spraying work, in such a state that the same is firmly adhered to the surface of the substrate and is 50% in density rate.

The spraying apparatus A of the foregoing film forming apparatus can be used in such a manner that the bundle shaped nozzle means 3 thereof is replaced with the bundle-shaped nozzle means of the kind shown in Fig. 2 or Fig. 3, or additionally with any desired one of other various kinds of bundle-shaped nozzle means designed in accordance with this invention, though not illustrated. Such a modification can be also considered that two film forming apparatus are used, and accordingly, two kinds of the bundle-shaped nozzle means of this invention are used jointly.

Fig. 5 shows that a case this invention spraying apparatus A shown in Fig. 2 is used for forming a striped pattern film on the surface of the substrate C. In this case, ultrafine particles immediately after produced by a vacuum vapor deposition apparatus as sprayed through the spraying apparatus A to form the striped pattern film thereof. Namely, instead of spraying the ultrafine particles previously prepared and charged into the container 6 in the foregoing first embodying example, the base end portion of the conveying pipe 1 is put in a ultrafine particle generating chamber 10. Numeral 11 denotes a heating container for containing a raw material 12 such as Ni or the like to be evaporated, numeral 13 denotes an electric source for heating, and numeral 14 denotes a pressure gauge. The generating chamber 10 is connected to a conduit pipe 15, and a base end portion of the pipe 15 is connected through a control valve 16 to the carrier gas bomb 7 such as of hydrogen gas, and a diverged pipe 17 diverged from the conduit pipe 15 is connected through a control valve 18 to a vacuum pump (not illustrated).

The film forming apparatus thus constructed is operated out as follows:

First, the air in the generating chamber 10 is removed by the vacuum pump, and thereafter the vacuum pump is stopped in operation and the valve 18 is closed. Then, the raw material 12 comprising a metallic block, for instance, is heated and evaporated by the heating electric source 13. Under this condition, the valve 16 of the gas bomb 7 of reducing or inert gas such as hydrogen, argon gas, etc. is opened for charging the gas under pressure into the generating chamber 10. Thereby, the generated innumerable ultrafine particles are mixed with and conveyed by the gas for being supplied through the interior of the conveying pipe 1 at a gas flowing rate of 0.2 l/sec., and thereby the same is sprayed through the three groups of the bundle-shaped nozzle means 3 of this invention onto the surface of the objective member located therebelow and moved at a speed of 0.5 mm/sec. Thus, there can be formed at a stroke the covering film B comprising three tape-shaped ultrafine particle covering films b,b,b corresponding to those groups of the bundle-shapes nozzle means 3.

Fig. 6 shows a covering film forming apparatus provided with this invention apparatus for forming a covering film in a vacuum atmosphere, instead of forming thereof in the external air as in the example of Fig. 5. Numeral 19 denotes a vacuum forming chamber which contains therein this invented apparatus A, numeral 20 denotes a gas bomb connected to the forming chamber 19 for supplying gas such as of hydrogen, argon or the like into the chamber 19 as an occasion demands, numeral 21 denotes a control valve interposed in a connecting pipe 22 thereof, numeral 23 denotes a conduit pipe extending from the forming chamer 19 for being connected to a vacuum pump (not illustrated), and numeral 24 denotes a valve interposed in the conduit pipe 23.

By the operation of this arrangement, the interior of the vacuum forming chamber 19 is kept to be 0,4 kPa [3 Torr], for instance, and the interior of the ultrafine particle generting chamber 10 is kept to be 2,1 kPa [15.5 Torr], for instance. Thus, the sprayed ultrafine particles are not exposed to the external air and at the same time are adhered to the objective surface for forming a predetermined pattern of covering film. The ultrafine particles to be used may be of any kind selected from inorganic materials such as metals (including alloy), oxides thereof, a nitride thereof, carbides thereof, ceramics or the like, and organic material such as synthetic resins or the like, and those are usually 10—1000 Å in particle diameter.

Thus, according to this invention, an ultrafine particle spraying nozzle means is formed into a bundle-shaped nozzle means comprising plural nozzle pipes bundled together, so that a clear outlined thick line or a surface-shaped deposit of the ultrafine particles can be formed, by spraying thereof, on an objective surface rapidly and at a high efficiency.

## Claims

1. A spraying apparatus suitable for surface-spraying of ultra-fine particles with a diameter between 10—100 Å, said apparatus comprising a particle container (6, 10), a carrier gas source (7) and a conveying pipe (1) provided at its end with nozzle means (3), characterized in that the nozzle means (3) is formed by at least one bundle of at least two parallel pipes (2), the pipes of each bundle being disposed subtantially without space between each other, and the outflow openings of all pipes (2) being substantially co-planar.

2. An apparatus as claimed in claim 1, wherein each nozzle pipe (2) is preferably smaller than 1 mm in caliber and is usually 0.2—0.6 mm in caliber.

3. An apparatus as claimed in claim 1 or 2, wherein the nozzles (2) of the nozzle means (3) are arranged in two parallel groups of staggered nozzles (2).

4. An apparatus as claimed in claim 1 or 2, wherein the nozzles (2) of the nozzle means (3) are each arranged in groups of three nozzles (2), whereby at least one row of such triple nozzle means (3) is provided.

5. An apparatus as claimed in any one of the claims 1 to 4, wherein the bundle-shaped nozzle means (3) is connected to a container (6) containing a mixture of the ultrafine particles and being connectable to a pressure source (7).

6. An apparatus as claimed in claim 5, wherein the pressure source (7) includes the carrier gas.

7. An apparatus as claimed in claim 6, wherein the carrier gas is hydrogen.

8. An apparatus as claimed in any one of the claims 1 to 7, wherein the bundle-shaped nozzle means (3) is connected to a container (10) containing a raw material (12) to be evaporated and being connected with heating source (13) and a pressure source (7).

9. An apparatus as claimed in claim 8, wherein the objective surface (C) is situated within a vacuum chamber (19).

10. An apparatus as claimed in claim 8, wherein the vacuum chamber is connectable to a gas source (20).

11. An apparatus as claimed in claim 9, wherein the gas of the gas source (20) is hydrogen.

12. An apparatus as claimed in claim 8, wherein the gas of the gas source (20) is argon.

## Patentansprüche

1. Zerstäubungsvorrichtung zur Oberflächenzerstäubung von ultrafeinen Teilchen mit einem Durchmesser zwischen 10Å und 1000Å mit
   einem Teilchenbehälter (6, 10),
   einer Quelle (7) für ein Trägergas
   und einer Förderleitung (1), die an ihrem Ende mit einer Düsenanordnung (3) ausgestattet ist,
   dadurch gekennzeichnet,
   daß die Düsenanordnung (3) aus wenigstens einem Bündel mit wenigstens zei parallelen Rohren (2) besteht, wobei die Rohre jedes Bündels im wesentlichen ohne Zwischenraum nebeneinander angeordnet sind und die Auslaßöffnungen aller Rohre (2) im wesentlichen in einer Ebene liegen.

2. Vorrichtung nach Anspruch 1, bei der jedes Düsenrohr (2) ein Kaliber von vorzugsweise weniger als 1 mm, insbesondere ein Kaliber im Bereich von 0,2 mm bis 0,6 mm hat.

3. Vorrichtung nach Anspruch 1 oder 2, bei der die Düsen (2) der Düsenanordnung (3) in zwei parallelen Gruppen von gegeneinander versetzten Düsen (2) angeordnet sind.

4. Vorrichtung nach Anspruch 1 oder 2, bei der die Düsen (2) der Düsenanordnung (3) jeweils in Gruppen von drei Düsen (2) angeordnet sind und bei der wenigstens eine Reihe solcher Dreifach-Düsenanordnung vorgesehen sind.

5. Vorrichtung nach Anspruch 1 bis 4, bei der die bündelförmigen Düsenanordnung mit einem Behälter (6) verbunden ist, der eine Mischung der ultrafeinen Teilchen enthält, und mit einer Druckquelle (7) verbindbar ist.

6. Vorrichtung nach Anspruch 5, bei der die Druckquelle (7) das Trägergas enthält.

7. Vorrichtung nach Anspruch 6, bei der das Trägergas Wasserstoff ist.

8. Vorrichtung nach einem der Ansprüche 1 bis 7, bei der die bündelförmige Düsenanordnung (3) mit einem Behälter (10) verbunden ist, der ein verdampfendes Rohmaterial enthält und mit einer Wärmequelle (13) und einer Druckquelle (7) verbunden ist.

9. Vorrichtung nach Anspruch 8, bei der die Objektfläche (C) in einer Vakuumkammer (19) angeordnet ist.

10. Vorrichtung nach Anspruch 9, bei der die Vakummkammer (19) mit einer Gasquelle (20) verbindbar ist.

11. Vorrichtung nach Anspruch 9, bei der das Gas der Gasquelle (20) Wasserstoff ist.

12. Vorrichtung nach Anspruch 8, bei der das Gas der Gasquelle (20) Argon ist.

**Revendications**

1. Appareil pour pulvérisation convenant pour pulvériser en surface des particules ultra-fines d'un diamètre entre 10 et 100 Å, ledit appareil comportant un conteneur (6, 10), une source de gaz support (7) et une conduite de transport (1) munie, à son extrémité, d'un moyen formant buse (3),

caractérisé en ce que le moyen formant buse (3) est formé d'au moins un faisceau d'au moins deux conduites parallèles (2), les conduites de chaque faisceau étant disposées sensiblement sans espace libre entre l'une et l'autre, et les ouvertures d'écoulement de toutes les conduites (2) étant paratiquement coplanaires.

2. Appareil selon la revendication 1, dans lequel chaque conduite formant buse (2) a de préférence un passage libre inférieur à 1 mm et habituellement un passage libre entre 0,2 et 0,6 mm.

3. Appareil selon la revendication 1 ou 2, dans lequelles buses (2) des moyens formant buse (3) sont disposées en deux groupes parallèles de buse décalés (2).

4. Appareil selon la revendication 1 ou 2, dans lequel les buses (2) des moyens formant buse (3) sont chacune disposées en groupes de trois buses (2), de sorte qu'il est prévu au moins une rangée de tels moyens formant triple buse (3).

5. Appareil selon l'une des revendications 1 à 4, dans lequel les moyens (3), formant buse, formés en faiscaux sont reliés à une conteneur (6) contenant un mélange des particules ultra-fines et pouvant être relié à une source de pression (7).

6. Appareil selon la revendication 5, dans lequel la source de pression (7) est constituée d'un gaz support.

7. Appareil selon la revendication 6, dans lequel le gaz support est de l'hydrogène.

8. Appareil selon l'une des revendications 1 à 7, dans lequel les moyens (3) formant buse, formés en faisceux sont reliés à un conteneur (10) contenant une matière première (12) à vaporiser et sont reliés à une source de chaleur (13) et à une source de pression (7).

9. Appareil selon la revendication 8, dans lequel la surface objet (C) est située dans une chambre à vide (19).

10. Appareil selon la revendication 8, dans lequel la chambre à vide (19) peut être reliée à une source de gaz (20).

11. Appareil selon la revendication 9, dans lequel le gaz de la source de gaz (20) est de l'hydrogène.

12. Appareil selon la revendication 8, dans lequel le gaz de la source de gaz (20) est de l'argon.

F I G .1(A)

F I G .2(A)

F I G .1(B)

F I G .2(B)

F I G .1(C)

F I G .2(C)

F I G .3(A)

F I G .3(B)

1

# FIG.4

# FIG.5

# FIG.6

2